# EUROPÄISCHE PATENTANMELDUNG

(11) **EP 1 030 527 A2**
(43) Veröffentlichungstag der Anmeldung: **23.08.2000**
(21) Anmeldenummer: 00103160.8
(22) Anmeldetag: 16.02.2000
(51) Int. Cl.: H04Q 7/24

(54) **Vermittlungseinrichtung**

(30) Priorität: 16.02.1999 DE 19906470
(71) Anmelder: SIEMENS AKTIENGESELLSCHAFT, 80333 München (DE)
(72) Erfinder: Grätz, Ingeborg, 85579 Neubiberg (DE); Rau, Helmut, 82110 Germering (DE); Ruckstuhl, Hanspeter, 82515 Wolfratshausen (DE); Trapp, Andreas, 81241 München (DE); Kreppel, Jan, 82377 Penzberg (DE); Clever, Michael, 82041 Oberhaching (DE)

(57) **Zusammenfassung**

Eine Vermittlungseinrichtung (VST) für ein Telekommunikationsnetz (FTN), in welcher für Teilnehmer des Netzes (FTN) Lokalanschlüsse (FAN) einrichtbar sind und welches zum Austauschen und Verarbeiten von Teilnehmersignalisierungen mit über die Lokalanschlüsse angeschlossenen Endgeräten (TEL,CTG) gemäß einem vorgegebenen Lokal-Signalisierungsprotokoll eingerichtet ist, mit einer Datenbasis (DAB), in welcher Anschlusszuordnungen (anz) zwischen jeweils einem Lokalanschluss (FAN,fan) und einer Teilnehmerkennung (mkg) eines Fremdnetzes (MFN) zur Identifikation eines Endgerätes (MOG) in dem Fremdnetz (MFN) einrichtbar sind, mit einer Schnittstelle (MIF) zum Austausch von Signalisierungsinformation mit Netzknoten eines oder mehrerer Fremdnetze (MFN) gemäß einem Fremd-Signalisierungsprotokoll, welches von dem Lokal-Signalisierungsprotokoll verschieden ist, sowie mit einem Überleitmodul (IWU), welches dazu eingerichtet ist, über einen Lokalanschluss (FAN) ausgetauschte Teilnehmersignalisierungen und über die Schnittstelle (MIF) gemäß dem Fremdsignalisierungsprotokoll ausgetauschte Signalisierungen ineinander umzusetzen, z.B. eine über einen Lokalanschluss (FAN) eintreffende Einbuchungsmeldung in eine Einbuchungsnachricht des Fremdnetzes (MFN) für den durch die Anschlusszuordnung spezifizierten Teilnehmer (MAN) umzusetzen und zu übermitteln.

## Beschreibung

Die Erfindung betrifft eine Vermittlungseinrichtung für ein Telekommunikationsnetz, in welcher für Teilnehmer des Netzes Lokalanschlüsse einrichtbar sind und welches zum Austauschen und Verarbeiten von Teilnehmersignalisierungen mit über die Lokalanschlüsse angeschlossenen Endgeräten gemäß einem vorgegebenen Lokal-Signalisierungsprotokoll eingerichtet ist.

Telekommunikationsnetze sind als Festnetze oder Mobilnetze, wie das bekannte GSM-Netz ('Global System for Mobile communications') - vgl. die GSM-Standards des Europäischen Normeninstituts für Telekommunikation (ETSI) -, ausgebildet und weisen untereinander vernetzte Vermittlungseinrichtungen auf. Im Rahmen der Erfindung sollen öffentliche Mobilfunknetze betrachtet werden.

Für Schnurlosverbindungen wurde z.B. der DECT-Standard (Digital Enhanced Cordless Telephone) des ETSI entworfen. Mittels Schnurlostechnologie (zur Realisierung der sogenannten CTM, 'Cordless Terminal Mobility') ist beispielsweise eine leitungsfreie Anbindung von Endgeräten an ein Festnetz möglich, z.B. dadurch dass der Teilnehmeranschluss von einem Endverteiler weg über eine DECT-Luftschnittstelle realisiert ist, wobei sich das Schnurlosteil im Funkbereich des als Schnurlos-Feststation ausgebildeten Endverteilers aufhalten muss. Eine detaillierte Darstellung der schnurlosen Anbindung eines Schnurlosteiles an ein Festnetz zur Verbesserung der Mobilität des Teilnehmers ist den ETSI-Empfehlungen zur CTM, DEN/NA-010039 und DEG/NA-061302-x, zu entnehmen.

In Mobilfunknetzen sind an die Vermittlungseinrichtungen jeweils Basisstationen angeschlossen, mit deren Hilfe über eine Luftschnittstelle Telekommunikationsendgeräte anschließbar sind. Diese Endgeräte ermöglichen einem Teilnehmer eines Mobilnetzes den Netzzugang. Die Vermittlungseinrichtungen sind darüber hinaus auch für den Übergang zu weiteren Netzen, z.B. einem Datenübertragungsnetz oder einem Festnetz, eingerichtet.

Aus dem GSM-Netz ist es weiters bekannt, innerhalb eines Mobilnetzes Speichereinheiten zu verwenden, in denen jeweils teilnehmerspezifische Daten zu den netzeigenen Diensten gespeichert sind. Eine dieser Speichereinheiten realisiert das sogenannte Heimatregister (HLR, 'Home Location Register'), das sich in der Regel an einem fest definierten Ort befindet und in dem die der Registrierung der mobilen Teilnehmers zugrundeliegenden Daten sowie Erreichbarkeitsinformationen betreffend mobile Teilnehmer abgelegt sind. Für den mobilen Teilnehmer und der mit ihm in Verbindung stehenden Basisstation ist eine Speichereinheit als sogenanntes Besucherregister (VLR, 'Visiting Location Register'), in dem sich die Teilnehmer- und Verbindungs-spezifischen Daten befinden, vorgesehen. Je nach Aufenthaltsort des mobilen Teilnehmers ändert sich auch die Speichereinheit für das Besucherregister.

Damit besteht für einen Teilnehmer eines Mobilnetzes die Möglichkeit zu 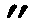 roamen", d.h. zwischen Zellen, also Einzugsbereichen der Basisstationen, unter Umständen auch während eines Gespräches zu wechseln. Der Wechsel zwischen den Zellen wird, wie bei dem Beispiel GSM-Netz bekannt, durch hierfür eingerichtete Protokolle gewährleistet, über welche die Teilnehmerdaten beispielsweise zwischen einem dem Teilnehmer fest zugeordneten Heimatregister und dem Besuchsregister der jeweils aktuellen Zelle ausgetauscht werden.

Ist es einem Teilnehmer, welcher ein Mehrbetriebsendgerät wie etwa ein sogenanntes 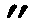 Dual-Mode Handy" für GSM- und DECT-Betrieb besitzt, möglich, sich mit seinem Endgerät in den Einzugsbereichen verschiedener Netze aufzuhalten, so erhält er üblicherweise für jedes dieser Netze eine eigene Rufnummer, beispielsweise eine GSM-Rufnummer und eine Rufnummer für einen drahtlos, nämlich mittels einer DECT-Luftschnittstelle, realisierten Teilnehmeranschluss in einem ISDN-Netz. Der Teilnehmer ist gewöhnlich lediglich in einem Netz aktiv. Damit ist er dann auch nur unter der in diesem Netz gültigen Rufnummer direkt erreichbar. Eine ähnliche Problematik ergibt sich, wenn der Teilnehmer in zwei oder mehr Netzen über Anschlüsse für verschiedene Endgeräte verfügt, beispielsweise einen Festnetzanschluss mit einem drahtgebundenen Telefongerät und einen Mobilanschluss für ein 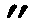 Handy".

Ein Wechsel des Teilnehmeraufenthaltes zwischen Telekommunikationsnetzen kann nicht ohne weiteres nach dem Vorbild des Wechsels zwischen den Zellen eines zellularen Funknetzes durchgeführt werden, da zum einen die Telekommunikationsnetze jeweils für sich vollständig, im wesentlichen unabhängig und somit zueinander prinzipiell gleichberechtigt sind - zumindest hinsichtlich der Verwaltung der Teilnehmerdaten -, zum anderen im allgemeinen verschiedene Architekturen und Protokolle aufweisen.

Eine bekannte Lösung zur Steuerung der Erreichbarkeit des Teilnehmers verwendet Rufumleitungen von den nicht nutzbaren Anschlüssen zu jenem, welchen der Teilnehmer nutzen möchte. Die Rufumleitungen müssen von dem Teilnehmer jeweils bei Betreten bzw. Verlassen des dem Anschluss zugeordneten Bereiches aktiviert und deaktiviert werden. Diese Lösung, die eigentlich für einen nur gelegentlichen oder vorübergehenden Aufenthalt bei einem fremden Anschluss konzipiert wurde, ist für den Teilnehmer lästig und besonders bei einer größeren Anzahl von Anschlüssen umständlich. Die Anrufumleitung zwischen Telekommunikationsnetzen ist zudem mit hohem Aufwand der Gesprächsumleitung verbunden, sowohl hinsichtlich der belegten Verbindungsleitungen bzw. -kanäle als auch bei dem Gesprächsaufbau, was sich auch in zum Teil störend langen Gesprächsaufbauzeiten bemerkbar macht - insbesondere findet gewöhnlich zuerst ein Paging in dem Netz, in dem der Anruf hereinkommt, statt, auch wenn der Teilnehmer in das andere Netz eingebucht und eine entsprechende Rufumleitung gesetzt ist. Dies gilt besonders, wenn wie bei zellularen Netzen die Teilnehmerdaten zumindest teilweise dezentralisiert sind.

Ein anderer Lösungsansatz besteht darin, bei einem ankommenden Ruf für die dem Benutzer zugeordneten Anschlüsse jeweils einen Rufzustellversuch durchzuführen. Eine derartige Dienstleistung kann in einem sogenannten Intelligenten Netz erbracht werden, in dem bekanntermaßen Zusatzdienste von einem hierfür vorgesehenen besonderen Netzknoten, dem sogenannten Dienstesteuerknoten ('service control point', SCP), durchgeführt werden; jedoch erfordert dies eine entsprechende Signalisierung zwischen den Netzknoten eines Netzes und dem Dienstesteuerknoten, in dem eine entsprechende, von den Datenbasis der Vermittlungsstelle unabhängigen Datenbasis eingerichtet werden muss. Außerdem muss bei einem Ruf für den betrachteten Teilnehmer erst eine Signalisierung zwischen der dem Anschluss zugeordneten Vermittlungsstelle und dem Dienstesteuerknoten hergestellt werden. Nicht zuletzt ist in Netzen, die keinen Dienstesteuerknoten oder ähnliche Einrichtungen aufweisen, diese Art der Rufzustellung nicht möglich. Nicht selten ist nämlich das Netz, in welchem der erste Anschluss des Teilnehmers eingerichtet ist, ein Festnetz ohne 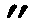 Intelligente" Betriebsmittel.

Eine weitere Lösung der Rufzustellung verwendet die Mobilitätsabläufe, welche in der α-Schnittstelle nach der Norm EN 301 144-1 des ETSI festgelegt sind. Hierbei ist allerdings die Verwendung spezifischer Endgeräte erforderlich, welche die α-Schnittstelle unterstützen, was infolge der besonderen Anforderungen dieser Schnittstelle zu hohen Anschaffungskosten und beträchtlichem Aufwand bei der Umrüstung führt.

In der DE 197 05 774 A1 der Anmelderin wird eine leitungsgebundenes Vermittlungssystem gelehrt, in welchem Besucher- und/oder Heimatdatenbasen nach dem Vorbild der Mobil-Vermittlungsknoten vorgesehen sind. Zur Verwaltung von Endgeräten, welche an das Vermittlungssystem schnurlos angeschlossen sind, werden Mobilitäts-Management-Informationen mit Hilfe eines Mobil-Protokolls zwischen dem Vermittlungssystem und anderen, entsprechenden Vermittlungssystemen ausgetauscht, um den Informationsaustausch zwischen Besucher- und Heimatdatenbasen zu realisieren. Hierfür wird das Signalisierungsprotokoll des Kommunikationsnetzes des Vermittlungssystems um das Mobil-Protokoll erweitert. Zur Anpassung der Mobilitäts-Management-Informationen hinsichtlich der Architektur bzw. Struktur der Datenbasen ist in dem leitungsgebundenen Vermittlungssystem eine Überleiteinheit (IWU, 'Interworking Unit') vorgesehen. Diese Lösung betrifft jedoch die Anbindung mobiler Teilnehmer in einem Festnetz und setzt voraus, dass die Endgeräte für ein Mobilnetz ausgelegt sind. Eine Behandlung von festnetzgebundenen Endgeräten - d.s. insbesondere leitungsgebundenen Endgeräte, aber auch schnurlos an das Festnetz herangeführte Endgeräte - einschließlich einer Koordinierung mit anderen Anschlüssen z.B. anderer Kommunikationsnetze und Verwaltung der Erreichbarkeit geht aus der DE 197 05 774 A1 nicht hervor.

Es ist daher Aufgabe der Erfindung, für an eine gegebene Vermittlungseinrichtung angeschlossene Teilnehmer, welche über zusätzliche Anschlüsse in anderen Telekommunikationsnetzen, insbesondere Mobilfunknetzen, verfügen, eine Verwaltung der Erreichbarkeit zu ermöglichen, wobei an die Endgeräte des Teilnehmers keine besonderen Anforderungen zu stellen sind und auch der Realisierungsaufwand auf seiten der Vermittlungseinrichtung möglichst gering sein soll.

Diese Aufgabe wird ausgehend von einer Vermittlungseinrichtung der eingangs genannten Art erfindungsgemäß durch eine Vermittlungseinrichtung mit
- einer Datenbasis, in welcher Anschlusszuordnungen zwischen jeweils einem Lokalanschluss und einer Teilnehmerkennung eines Fremdnetzes, welche zur Identifikation eines Teilnehmers bzw. dessen Endgerätes in dem Fremdnetz verwendbar ist, einrichtbar sind,
- zumindest einer Überleitschnittstelle zum Austausch von Signalisierungsinformation mit Netzknoten eines oder mehrerer Fremdnetze gemäß einem Fremd-Signalisierungsprotokoll, welches von dem Lokal-Signalisierungsprotokoll verschieden ist, sowie
- zumindest einem Überleitmodul, welches dazu eingerichtet ist, über einen Lokalanschluss ausgetauschte Teilnehmersignalisierungen und über die zumindest eine Überleitschnittstelle gemäß dem Fremdsignalisierungsprotokoll ausgetauschte Signalisierungen ineinander umzusetzen,
   gelöst.

Diese Lösung ermöglicht auf einfache Weise die Verwaltung einer Teilnehmermobilität zwischen Teilnehmeranschlüssen verschiedener Netze, wobei bekannte Endgeräte weiterhin genutzt werden können. Dienste intelligenter Netze werden nicht benötigt. Die der Erfindung zugrundeliegende Idee ist die Nachbildung der Fremdnetz-Schnittstelle für die Mobilitätsverwaltung, welche basierend auf in der Vermittlungseinrichtung gespeicherten Mobilitätsdaten durch die dem Lokalnetz eigene Teilnehmersignalisierung ausgelöst wird.

Im Sinne der genannten Erfindungsidee ist es insbesondere günstig, wenn das Überleitmodul dazu eingerichtet ist, eine über einen Lokalanschluss, für welchen eine Anschlusszuordnung zu einer Teilnehmerkennung eines Fremdnetzes eingerichtet ist, eintreffende Einbuchungsmeldung in eine Einbuchungsnachricht des Fremdsignalisierungsprotokolls für den durch die Anschlusszuordnung spezifizierten Teilnehmer umzusetzen und an das betreffende Fremdnetz zu übermitteln.

Dabei ist die Vermittlungseinrichtung vorteilhafterweise dazu eingerichtet, eine über einen Lokalanschluss eintreffende Rufanforderung für eine vorgegebene Rufnummer eines Lokaldienstes als Einbuchungsmeldung des dem Lokalanschluss zugeordneten Teilnehmers zu verarbeiten. Dies gestattet eine Realisierung einer Einbuchungsmeldung auf der Grundlage der bestehenden Teilnehmersignalisierung und erübrigt somit eine Erweiterung der Signalisierung.

Es ist des weiteren günstig, wenn in der Vermittlungseinrichtung ein lokales Besucherregister vorgesehen ist, in welches aufgrund einer über einen Lokalanschluss eintreffenden Einbuchungsmeldung der zugeordnete Teilnehmer als am Lokalanschluss eingebucht eingetragen wird. Auf diese Weise kann die Vermittlungseinrichtung gegenüber dem Fremdnetz nach Art eines Mobilnetzknotens agieren.

Dabei ist es besonders günstig, wenn das lokale Besucherregister als von der Datenbasis unabhängiges Datenregister realisiert ist.

Eine bevorzugte Ausführungsform der erfindungsgemäßen Vermittlungseinrichtung, bei der die genannten Vorteile besonders zum Ausdruck kommen, ist als Festnetzvermittlung für ein Telefon-Festnetz realisiert.

Es ist zudem vorteilhaft, wenn die Anschlusszuordnungen sich jeweils auf eine Mobilteilnehmerkennung für ein Endgerät eines als Mobilnetz realisierten Fremdnetzes beziehen. Dadurch gelingt eine Einbeziehung des Lokalanschlusses in die Verwaltung der mobilen Erreichbarkeit des Mobilnetzes.

Günstigerweise ist das Fremdsignalisierungsprotokoll als Signalisierungsprotokoll für Mobilfunknetze realisiert und das Überleitmodul zum Austausch von Signalisierungen gemäß diesem Mobilfunksignalisierungsprotokoll mit einem Heimatregister eines als Mobilfunknetz realisierten Fremdnetzes eingerichtet. Dies entspricht einer 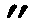 Anbindung" der Vermittlungseinrichtung an ein (fremdes) Mobilnetz, ohne dass die Teilnehmersignalisierung auf das Mobil-Signalisierungsprotokoll angehoben werden müsste.

Ebenso ist es günstig, wenn das Fremdsignalisierungsprotokoll als Signalisierungsprotokoll für intelligente Netze realisiert ist und das Überleitmodul zum Austausch von Signalisierungen gemäß diesem Signalisierungsprotokoll mit einem Dienstesteuerknoten eines als intelligentes Netz realisierten Fremdnetzes eingerichtet ist.

Die Erfindung samt weiterer Vorzüge wird im folgenden unter Bezugnahme auf die beigelegten Figuren näher erläutert. Es sei angemerkt, dass die dargestellten Ausführungsformen lediglich Beispielcharakter haben und nicht dahingehend zu verstehen sind, dass die Erfindung auf dies Beispiele beschränkt wäre. Die Figuren zeigen
- Fig. 1: eine erfindungsgemäße Vermittlungsstelle und die angebundenen Netze in einer schematischen Darstellung nach Art eines Blockdiagramms;
- Fig. 2: ein Signalablaufsdiagramm eines Registriervorgangs eines Festnetzteilnehmers.

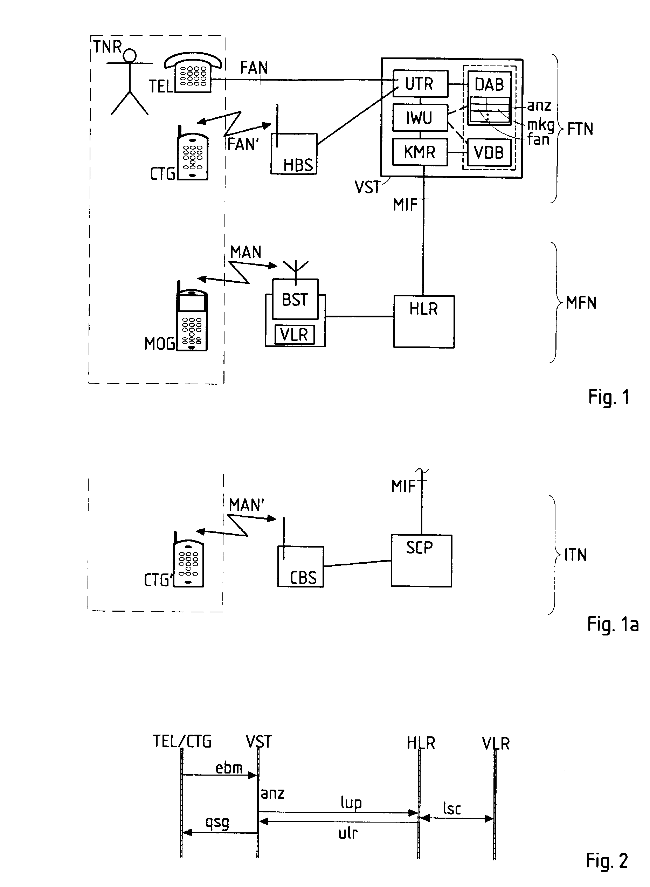

In Fig. 1 ist eine Vermittlungsstelle VST eines Telefonfestnetzes FTN gezeigt, die nach der Erfindung über eine Schnittstelle MIF mit einem zweiten Telefonnetz, nämlich einem GSM-Netz MFN, verbunden ist und die Mobilität von Festnetzteilnehmern TNR, welche neben ihrem Festnetzanschluss FAN einen Anschluss MAN in dem GSM-Netz haben, unterstützt. Ein solcher Benutzer TNR ist repräsentativ mit seinem Festnetzanschluss FAN gezeigt, über den sein leitungsgebundenes Telefonendgerät TEL angeschlossen ist. Auf seiten des Festnetzes FTN ist der Anschluss FAN zu der Vermittlungsstelle VST geführt; gewöhnlich verläuft die Anschlussführung über Zubringereinrichtungen wie z.B. einem Anschlusskonzentrator, welche freilich für die Erfindung nicht weiter von Belang und daher in Fig. 1 nicht gezeigt sind.

In dem GSM-Netz MFN ist der Benutzer TNR ebenfalls als Teilnehmer angemeldet und verfügt somit über einen Mobilanschluss MAN und ein diesem zugeordnetes Mobilgerät MOG (sogenanntes 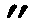 Handy"). Stellvertretend für die bekannte Mobilfunknetz-Architektur sind in Fig. 1 das Heimatregister HLR und eine Basisstation BST gezeigt, bei welcher das Mobilgerät MOG gerade eingebucht ist und welche mit dem Heimatregister HLR verknüpft ist.

Die Vermittlungsstelle VST weist eine Übermittlungsroutine UTR zur Durchführung der Zwischenamtssignalisierung im Festnetz FTN und zur Behandlung der Teilnehmersignalisierung für die von der Vermittlungsstelle verwalteten Anschlüsse FAN ( 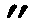 Lokalanschlüsse") auf. Die Signalisierung erfolgt in dem Festnetz FTN gemäß einem Festnetz-Signalisierungsprotokoll wie z.B. dem DSS1 gemäß ETSI-Normen Q.931 und Q.932 ( 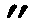 Lokal-Signalisierungsprotokoll"); hierbei greift die Übermittlungsroutine UTR auf die in der Datenbank DAB gehaltenen Teilnehmerdaten zu.

Erfindungsgemäß ist die Vermittlungsstelle VST über eine Schnittstelle MIF mit dem GSM-Netz MFN verknüpft, welches in dem Beispiel das 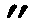 Fremdnetz" im Sinne der Erfindung darstellt. Die Signalisierung erfolgt im GSM-Netz aufgrund des MAP-Protokolls (vgl. GSM-Standard 09.02). Die Vermittlungsstelle signalisiert über die Schnittstelle MIF mittels eines auf seiten der Vermittlungsstelle VST vorgesehenen Mobil-Kommunikationsmoduls KMR. Für die Umsetzung der Signalisierungen zwischen dem Festnetzprotokoll DSS1 und dem Mobilprotokoll MAP ist ein Überleitmodul IWU vorgesehen. Das Kommunikationsmodul KMR und das Überleitmodul IWU sind in dem betrachteten Beispiel programmtechnisch als Vermittlungsfunktionen realisiert, können jedoch grundsätzlich auch in Form z.B. elektronischer Einrichtungen ausgeführt sein. Die Vermittlungsstelle VST stellt für das GSM-Netz MFN einen Vermittlungsknoten dar, weshalb ihr auch eine Besucherregister-Identifikation (sogenannte 'vlrId') zugeteilt ist und sie eine Besucherdatenbasis VDB aufweist. Die Besucherdatenbasis VDB hält Teilnehmerinformationen betreffend jene mobile Teilnehmer des GSM-Netzes, welche über die Vermittlungsstelle VST auf dem betreffenden Festnetzanschluss FAN eingebucht sind. Das Überleitmodul IWU greift auf die Datenbank DAB und/oder die Besucherdatenbasis VDB mittelbar über die Übermittlungsroutine UTR bzw. das Kommunikationsmodul KMR zu; in einer Variante könnte der Zugriff auch direkt erfolgen. Die Besucherdatenbasis VDB ist in dem Beispiel als von der Vermittlungs-Datenbank DAB getrennter Speicher - wodurch ein unabhängiger Zugriff erleichtert ist sowie die Verwaltung und Wartung vereinfacht ist - ausgeführt, kann jedoch auch als Teil der Datenbank DAB realisiert sein.

Im Zusammenhang mit der Erfindung erfolgt das Einbuchen eines Teilnehmer bei der Vermittlungsstelle VST über seinen Festnetzanschluss FAN. Das Einbuchen am Festnetzanschluss FAN wird von dem Teilnehmer TNR durch manuelles Anmelden an dem Endgerät TEL vorgenommen. Dies geschieht beispielsweise dadurch, dass der Benutzer TNR über sein Endgerät TEL eine vorgegebene Rufnummer wählt. Seitens der Vermittlung VST ist diese Rufnummer einem Lokaldienst zugeordnet, beispielsweise durch eine Ziffernauswertung realisiert, welche die in der Rufanforderung spezifizierte Ziffernfolge überprüft und, sofern sie mit der vorgegebenen Nummer für den Einbuchungsvorgang übereinstimmt, als Einbuchungsmeldung erkennt. Auch kann auf dem Endgerät auch ein sogenannter 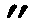 Push-Button" vorgesehen sein, welcher programmiert ist, bei Aktivierung eine Nachricht zusenden, welche als Einbuchungsmeldung interpretierbar ist, z.B. eine Rufanforderung für die Rufnummer des Teilnehmereinbuchungsdienstes.

Das Aussenden der Nachricht, welche kann in einer Variante, worin der Teilnehmer auf einem Schnurlosanschluss FAN' mit seinem Schnurlosgerät CTG angemeldet ist, auch selbsttätig aufgrund des Einbuchens des Schnurlosgeräts CTG bei der zugehörenden Basisstation HBS ('Home Base Station') erfolgen. Es sei angemerkt, dass die Verwaltung einer gegebenenfalls vorhandenen Schnurlos-Mobilität des Teilnehmers TNR lediglich innerhalb des von der Basisstation HBS kontrollierten Einzugsbereiches erfolgt, die Art der Anschlussführung gegenüber der Vermittlungsstelle VST jedoch - da es sich ja um einen Anschluss eines Festnetzes handelt - nicht sichtbar ist.

Wie oben beschrieben wird die vom Endgerät TEL,CTG gesendete Rufanforderung seitens der Vermittlungsstelle VST als Einbuchungsmeldung des Teilnehmers TNR für den Festnetzanschluss FAN verarbeitet. Aufgrund dieser Einbuchungsmeldung ebm wird durch das Überleitmodul IWU der in dem Signalablaufsdiagramm der Fig. 2, worin die Zeitachse von oben nach unten verläuft, dargestellte und im folgenden erläuterte Registriervorgang durchgeführt.

Für den Festnetzanschluss FAN wird in dem Besucherregister VDB ein Eintrag betreffend den Aufenthaltsort des Teilnehmers TNR erstellt. Dem Anschluss FAN ist eine Teilnehmerkennung des GSM-Netzes MFN fest zugeordnet. Diese Anschlusszuordnung anz ist in dem Beispiel in Form eines Eintrags in der Datenbasis DAB realisiert, welcher z.B. jeweils eine Kennung fan für den Festnetzanschluss FAN, z.B. dessen Portadresse, und eine Teilnehmerkennung mkg betreffend den Mobilanschluss MAN bzw. das Mobilgerät MOG des Benutzers TNR aufweist. Die Teilnehmerkennung mkg ist z.B. in Form der IMSI-Nummer des Mobilgeräts MOG gegeben. Die IMSI-Nummer ('International Mobile Station Identity') dient, wie dem Fachmann bekannt, zur Identifikation eines Teilnehmers bzw. dessen Mobilendgerätes in einem Mobilfunknetz.

Sodann wird von dem Überleitmodul IWU eine Aktualisierung des Aufenthaltsbereiches (betreffend den Mobilteilnehmer TNR) zu dem Heimatregister HLR des Mobilfunknetzes MFN veranlasst. Die Aktualisierungsprozedur wird mittels der Kommunikationsroutine KMR nach dem bekannten Location Update des GSM-Netzes durchgeführt, welche mit einer 'LocationUpdate'-Nachricht lup, in der die IMSI-Nummer und die der Vermittlungsstelle als Mobilnetzknoten zugeteilte Identifikation (sogenannte 'vlrId') enthält. Demgemäß wird der neue Aufenthaltsbereich des Teilnehmers in dem Heimatregister HLR eingetragen und die Löschung lsc der vorhergehenden Aufenthaltsinformation, beispielsweise in dem der Basisstation BST zugeordneten Besucherregister VLR, veranlasst.

Das Heimatregister HLR sendet eine Aktualisierungsbestätigung in Form einer sogenannten 'UpdateLocationResult'-Nachricht ulr an die Vermittlungsstelle VST zurück. Falls gewünscht, gibt schließlich die Vermittlungsstelle an den Teilnehmer ein Quittiersignal qsg aus oder bestätigt den erfolgreich durchgeführten Registriervorgang auf andere Weise, beispielsweise durch eine entsprechende, vorgegebene Ansage.

Als Ergebnis dieses erfindungsgemäßen Registriervorganges erfolgt nun die Rufzustellung von Rufen, welche für den Teilnehmer unter dessen Mobilrufnummer (MSISDN-Nummer) erfolgen, über die Festnetzvermittlung VST, welche diese Rufe zu dem Telefongerät TEL bzw. dem Schnurlosteil CTG zustellt.

Die Erfindung ermöglicht die Verwaltung einer Teilnehmermobilität zwischen Teilnehmeranschlüssen verschiedener Netze, insbesondere zwischen einem Anschluss in einem herkömmlichen Festnetzes und einem Anschluss eines weiteren Netzes, wobei bekannte Endgeräte weiterhin genutzt werden können. Dienste intelligenter Netze werden nicht benötigt. Dadurch ist eine Realisierung auch in Netzen, die keine Funktionalität intelligenter Netze aufweisen oder nicht zur Verfügung stellen, möglich; somit ist die Erfindung besonders für den Betrieb solcher digitaler Netze sowie analoger Netze interessant. Es sei angemerkt, dass zu diesen Netzen derzeit ein beträchtlicher Anteil der Telefonnetze zählt.

Des weiteren ermöglicht die Erfindung auf einfache und zuverlässige Weise eine Verknüpfung eines Festnetzes mit einem Mobilnetz. Dies gelingt durch die Nachbildung einer MAP-Schnittstelle für die Zwecke einer Mobilitätsverwaltung, welche basierend auf in der Vermittlungseinrichtung gespeicherten Mobilitätsdaten - die Anschlusszuordnungen anz mit den Teilnehmerkennungen mkg - durch die dem Festnetz eigene Teilnehmersignalisierung veranlasst wird. Auch lässt sich durch die Erfindung eine sogenannte 'One Number'-Lösung realisieren, bei welcher der Teilnehmer unter einer einzigen Nummer - in diesem Fall unter der MSISDN-Nummer des GSM-Netzes - in den beteiligten Netzen erreichbar ist.

Weitere Vorteile der Erfindung sind eine vereinfachte Verrechnung der Gesprächsgebühren, da diese nun über das GSM-Netz erfolgt, und eine verbesserte Synchronhaltung der Teilnehmerdaten zwischen den beteiligten Netzen.

Es sei darauf hingewiesen, dass die Erfindung aus Gründen der Einfachheit nicht vorsieht, dass beim Einbuchen des Teilnehmers TNR am Festnetzanschluss FAN die seitens des Mobilgeräts MOG gehaltenen Daten, wie z.B. eine TMSI-Nummer ('Temporary Mobile Station Identity'), gelöscht werden. Dies kann dazu führen, dass beim Wiederanmelden im Mobilnetz MFN die nicht gelöschte TMSI-Nummer zum Fehlschlagen der Authentisierungsprozedur führt. Günstigerweise sollten daher Mobilgeräte verwendet werden, welche sich in einem derartigen Fall rücksetzen und eine neue Einbuchungsprozedur aufnehmen.

Die Erfindung eignet sich selbstverständlich für andere Arten von Netzen als die in dem obigen Beispiel genannten. Als nur ein weiteres Beispiel sei, unter Bezugnahme auf Fig. 1a, eine Variante des oben behandelten Ausführungsbeispieles behandelt, in welchem anstelle eines GSM-Netzes das Fremdnetz als intelligentes Netz ITN ausgeführt ist und der Teilnehmer TNR über einen schnurlos, beispielsweise in einer auf dem DECT-Standard beruhenden Schnurlosanlage CBS realisierten Mobilanschluss MAN' des intelligenten Netzes verfügt. Das über den Mobilanschluss MAN' angebunden Schnurlosteil CTG' tritt ans Stelle des Mobilgerätes MOG in dem obigen Beispiel; es kann in besonderen Fällen mit dem über den Festnetzanschluss FAN' und eine Basisstation HBS angebundenen Schnurlosgerät CTG identisch sein. In dem intelligenten Netz ITN ist nach bekannter Art ein Dienstesteuerknoten SCP zur Steuerung von Diensten des intelligenten Netzes ITN, wie z.B. eines Mobilitätsdienstes zur Unterstützung der Mobilität schnurloser Teilnehmer, vorgesehen. Der SCP tritt an Stelle des Heimatregisters HLR in dem obigen Beispiel. Die Signalisierung in dem intelligenten Netz ITN sowie die Signalisierung über die Schnittstelle MIF erfolgt beispielsweise über das INAP-Protokoll gemäß der ETSI-Norm EN 301 140-1. Auch ist hier die Teilnehmerkennung, welche in der Anschlusszuordnung spezifiziert ist, entsprechend den DECT-Standards z.B. eine IPUI-Kennung ('International Portable User Identity'). Die Konfiguration seitens des Festnetzes kann dagegen gleich bleiben (weshalb dieser Teil in Fig. 1a nicht gezeigt ist); die Signalisierung erfolgt analog zu dem oben Gesagten in dem intelligenten Netz ITN unter Verwendung der für den Fachmann geläufigen Nachrichten der INAP-Signalisierung.

## Patentansprüche

1. Vermittlungseinrichtung (VST) für ein Telekommunikationsnetz (FTN), in welcher für Teilnehmer des Netzes (FTN) Lokalanschlüsse (FAN) einrichtbar sind und welches zum Austauschen und Verarbeiten von Teilnehmersignalisierungen mit über die Lokalanschlüsse angeschlossenen Endgeräten (TEL,CTG) gemäß einem vorgegebenen Lokal-Signalisierungsprotokoll eingerichtet ist,
**gekennzeichnet durch**
- eine Datenbasis (DAB), in welcher Anschlusszuordnungen (anz) zwischen jeweils einem Lokalanschluss (FAN,fan) und einer Teilnehmerkennung (mkg) eines Fremdnetzes (MFN), welche zur Identifikation eines Teilnehmers bzw. dessen Endgerätes (MOG) in dem Fremdnetz (MFN) verwendbar ist, einrichtbar sind,
- zumindest eine Schnittstelle (MIF) zum Austausch von Signalisierungsinformation mit Netzknoten eines oder mehrerer Fremdnetze (MFN) gemäß einem Fremd-Signalisierungsprotokoll, welches von dem Lokal-Signalisierungsprotokoll verschieden ist, sowie
- zumindest ein Überleitmodul (IWU), welches dazu eingerichtet ist, über einen Lokalanschluss (FAN) ausgetauschte Teilnehmersignalisierungen und über die zumindest eine Schnittstelle (MIF) gemäß dem Fremdsignalisierungsprotokoll ausgetauschte Signalisierungen ineinander umzusetzen.

2. Vermittlungseinrichtung nach Anspruch 1,
**dadurch gekennzeichnet**, dass das Überleitmodul (IWU) dazu eingerichtet ist, eine über einen Lokalanschluss (FAN), für welchen eine Anschlusszuordnung (anz) zu einer Teilnehmerkennung (mkg) eines Fremdnetzes eingerichtet ist, eintreffende Einbuchungsmeldung in eine Einbuchungsnachricht des Fremdsignalisierungsprotokolls für den durch die Anschlusszuordnung spezifizierten Teilnehmer (MAN) umzusetzen und an das betreffende Fremdnetz (MFN) zu übermitteln.

3. Vermittlungseinrichtung nach Anspruch 1 oder 2,
**dadurch gekennzeichnet**, dass sie dazu eingerichtet ist, eine über einen Lokalanschluss (FAN) eintreffende Rufanforderung (ebm) für eine vorgegebene Rufnummer eines Lokaldienstes als Einbuchungsmeldung des dem Lokalanschluss zugeordneten Teilnehmers zu verarbeiten.

4. Vermittlungseinrichtung nach einem der Ansprüche 1 bis 3,
**dadurch gekennzeichnet**, dass ein lokales Besucherregister (VDB) vorgesehen ist, in welches aufgrund einer über einen Lokalanschluss (FAN) eintreffenden Einbuchungsmeldung (ebm) der zugeordnete Teilnehmer als am Lokalanschluss eingebucht eingetragen wird.

5. Vermittlungseinrichtung nach Anspruch 4,
**dadurch gekennzeichnet**, dass das lokale Besucherregister (VDB) als von der Datenbasis (DAB) unabhängiges Datenregister realisiert ist.

6. Vermittlungseinrichtung nach Anspruch 1 bis 5,
**dadurch gekennzeichnet**, dass sieals Festnetzvermittlung für ein Telefon-Festnetz (FTN) realisiert ist.

7. Vermittlungseinrichtung nach einem der Ansprüche 1 bis 6,
**dadurch gekennzeichnet**, dass die Anschlusszuordnungen sich jeweils auf eine Mobilteilnehmerkennung für ein Endgerät (MOG) eines als Mobilnetz realisierten Fremdnetzes (MFN) beziehen.

8. Vermittlungseinrichtung nach einem der Ansprüche 1 bis 7,
**dadurch gekennzeichnet**, dass das Fremdsignalisierungsprotokoll als Signalisierungsprotokoll für Mobilfunknetze (MAP) realisiert ist und das Überleitmodul (IWU) zum Austausch von Signalisierungen gemäß diesem Mobilfunksignalisierungsprotokoll mit einem Heimatregister (HLR) eines als Mobilfunknetz realisierten Fremdnetzes (MFN) eingerichtet ist.

9. Vermittlungseinrichtung nach einem der Ansprüche 1 bis 7,
**dadurch gekennzeichnet**, das Fremdsignalisierungsprotokoll als Signalisierungsprotokoll für intelligente Netze (ITN) realisiert ist und das Überleitmodul (IWU) zum Austausch von Signalisierungen gemäß diesem Signalisierungsprotokoll mit einem Dienstesteuerknoten (SCP) eines als intelligentes Netz realisierten Fremdnetzes (ITN) eingerichtet ist.
